**Europäisches Patentamt**

**European Patent Office**

**Office européen des brevets**

(19)

(11) Numéro de publication: **0 164 479 B1**

(12) **FASCICULE DE BREVET EUROPEEN**

(45) Date de publication du fascicule du brevet:
**03.08.88**

(51) Int. Cl.⁴: **E 06 B 3/96**, F 16 B 7/04

(21) Numéro de dépôt: **84402605.4**

(22) Date de dépôt: **14.12.84**

(54) **Ensemble de liaison pour réaliser l'assemblage de deux profilés.**

(30) Priorité: **28.03.84 FR 8404858**

(43) Date de publication de la demande:
**18.12.85 Bulletin 85/51**

(45) Mention de la délivrance du brevet:
**03.08.88 Bulletin 88/31**

(84) Etats contractants désignés:
**AT BE CH DE FR GB IT LI LU NL SE**

(56) Documents cités:
**EP - A - 0 094 300**
**FR - A - 2 001 656**
**FR - A - 2 053 635**
**FR - A - 2 157 100**
**FR - A - 2 337 828**
**FR - A - 2 424 434**
**US - A - 3 829 226**

(73) Titulaire: **ALUMAIER, 20, boulevard Turgot,
F-13012 Marseille (FR)**

(72) Inventeur: **Leree, Patrick, 167 Chemin du Pont de Vivaux,
F-13010 Marseille (FR)**
Inventeur: **Cassard, Michel, 25, rue de la Saoupe,
F-13011 Marseille (FR)**

(74) Mandataire: **Grosset-Fournier, Chantal Catherine et al,
SC Ernest Gutmann/Yves Plasseraud 67 boulevard
Haussmann, F-75008 Paris (FR)**

ACTORUM AG

## Description

La présente invention concerne les ensembles de liaison pour réaliser l'assemblage de deux profilés creux dont l'un présente au moins une rainure latérale, lesdites ensembles étant munis d'un tenon susceptible de coopérer avec la rainure latérale dudit profilé et présentant un faible encombrement de manière à pouvoir se loger à l'intérieur de l'autre profilé.

On connaît déjà des dispositifs de liaison utilisées à cette fin, de tels dispositifs se devant d'être d'une manipulation simple, au montage comme au démontage, et de permettre, par conséquent, d'ériger aisément une structure stable facilement transformable.

Le brevet français no 2 222 889 (7 310 621), décrit par exemple un ensemble de liaison, en particulier pour rayonnages, comportant un organe destiné à relier deux profilés et un élément mobile longitudinalement, et présentant une cavité conique avec laquelle coopère une vis à l'extrémité conique perpendiculaire et excentrée par rapport à cette cavité, ledit élément mobile longitudinalement comportant une extrémité conique qui est entourée par une bague extensible.

D'autre part, le brevet français no 2 180 404 (7 313 451) décrit des ensembles de liaison démontables, chacun de ces éléments comportant une broche qui peut coulisser et être bloquée, et dont l'extrémité extérieure porte une barrette transversale, laquelle se prolonge par un tenon disposé dans l'axe de la broche et destiné à s'engager dans le trou d'un profilé.

Ces deux dispositifs présentent l'inconvénient de nécessiter, après avoir été introduits dans l'un des profilés, l'adjonction d'une vis et d'être, par conséquent, d'un maniement peu aisé. De plus, lors de la fixation, et en particulier lors du vissage, l'effort exerce par la vis sur le dispositif de fixation peut endommager ce dernier ainsi que le profilé dans lequel est inséré ledit dispositif.

D'autre part, le brevet britannique no 1 204 404 propose un dispositif d'assemblage comportant deux pions escamotables susceptibles de s'engager dans deux alésages pratiqués dans un profilé récepteur. Ce mode d'assemblage n'est toutefois pas satisfaisant car il nécessite, afin de réaliser une fixation exempte de jeu, un perçage précis des deux alésages.

Le document EP-A-0 094 300 décrit un ensemble de liaison pour réaliser l'assemblage de deux profilés creux dont un présente au moins une rainure latérale, ledit ensemble comportant une pièce principale munie d'un tenon susceptible de coopérer avec la rainure latérale dudit profilé et présentant un faible encombrement de manière à pouvoir se loger à l'intérieur de l'autre profilé. La pièce principale est adaptée pour recevoir un coulisseau et un élément d'actionnement. Le coulisseau est muni d'un pion escamotable susceptible de coopérer avec une ouverture pratiquée dans le profilé recevant l'ensemble de liaison. L'élément d'actionnement est formé d'une vis engagée dans un alésage tarau dé ménagé dans la pièce principale. L'axe de cet alésage est incliné par rapport à l'axe du profilé récepteur, et la vis vient reposer contre une pente ménagée sur le coulisseau. Cet ensemble de liaison, bien qu'ayant déjà rendu de grands services, ne donnent pas pleinement satisfaction.

La présente invention vise à perfectionner les dispositifs de liaison jusqu'ici proposés.

Le nouvel ensemble de liaison selon l'invention permet de réaliser l'assemblage de deux profilés creux dont un présente au moins une rainure latérale. Ledit ensemble comporte, comme il est classique, une pièce principale munie d'un tenon susceptible de coopérer avec la rainure latérale dudit profilé et présentant un faible encombrement de manière à pouvoir se loger à l'intérieur de l'autre profilé, ladite pièce principale présentant de plus la forme générale d'un berceau susceptible d'accueillir un coulisseau et un élément d'actionnement, ledit coulisseau étant muni d'un pion escamotable susceptible de coopérer avec une ouvertute pratiquée dans ledit profilé recevant l'ensemble de liaison.

De façon caractéristique, selon l'invention ledit élément d'actionnement est muni d'une vis traversant et d'une pente, ledit berceau comportant à une extrémité une pente et à l'autre un épaulement, ledit coulisseau étant situé du côté de l'épaulement et ledit élément de commande du côté de la pente, de façon à ce que, sous l'action d'un enfoncement de la vis dans un alésage taraudé pratiqué dans ladite pièce principale, ledit élément d'actionnement dont la pente coopère avec la pente dudit berceau, par un déplacement vertical pousse ledit coulisseau dans une direction longitudinale vers l'épaulement de la pièce principale.

Le nouvel ensemble de liaison selon l'invention présente de multiples avantages.

En effet, l'ensemble de liaison se présente sous forme monobloc, réduisant ainsi le risque d'égarement des différentes pièces le composant et simplifiant le montage des profilés.

De plus, le montage, outre sa simplicité, est rapide, le clavetage du pion maintenant dans un premier temps les deux profilés permettant d'effectuer rapidement dans un second temps le serrage de la vis, ce mode d'assemblage ne nécessitant aucune adjonction de pièces.

Plus encore, il permet un serrage énergique des deux profilés sans toutefois provoquer la déformation de ces derniers, la répartition des efforts s'effectuant d'une façon optimale. Enfin, l'ensemble de liaison peut être utilisé différemment selon l'axe vertical ou transversal du profilé récepteur, permettant ainsi un montage omnidirectionnel fonction des difficultés d'accès au profilé.

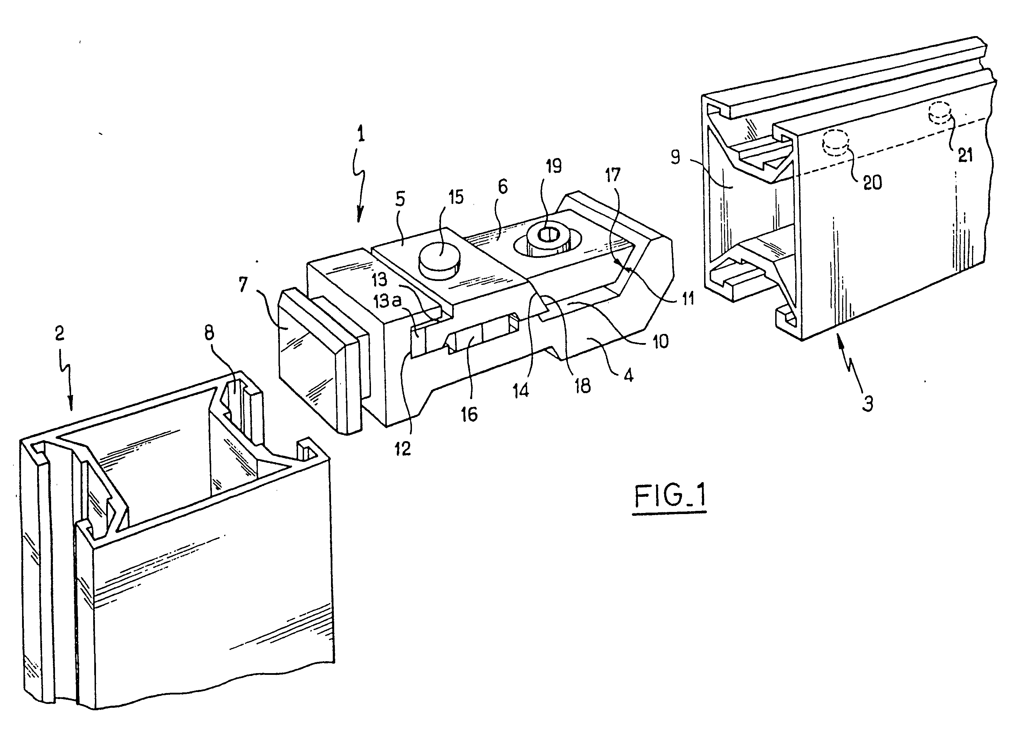

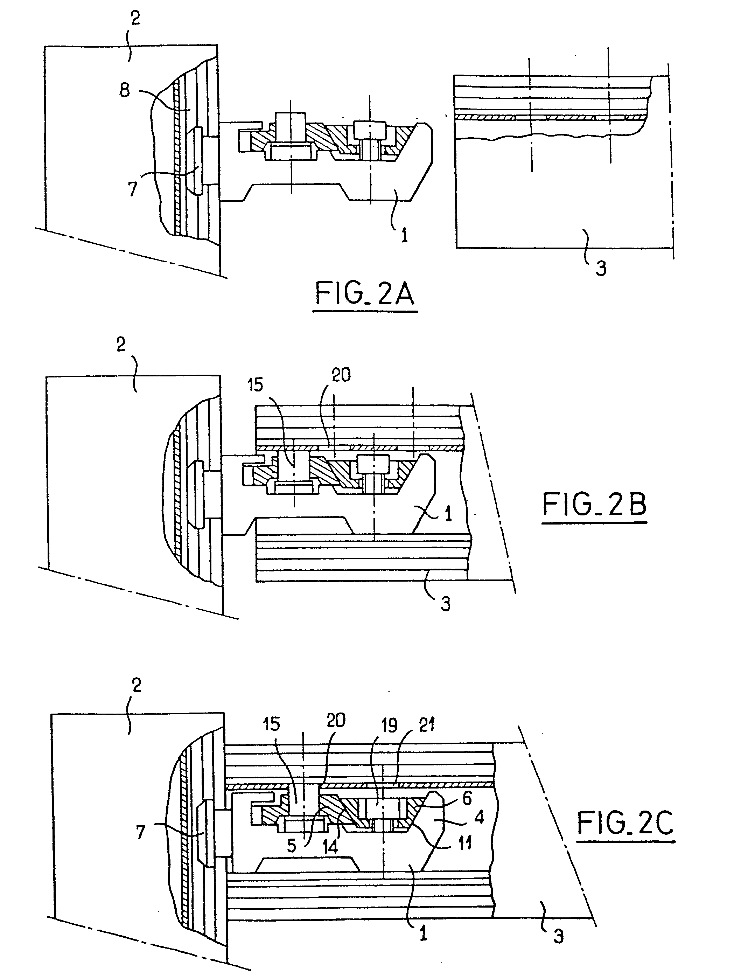

D'autres caractéristiques et avantages de l'invention apparaîtront au cours de la description qui va suivre et sur les dessins, la figure 1 illustre l'invention dans un mode de réalisation préféré, donné à titre d'exemple; les figures 2a, 2b et 2c illustrent un mode d'assemblage de deux profilés à l'aide de l'ensemble de liaison selon l'invention;

sur toutes les figures, les mêmes désignent les mêmes éléments. Plus précisément:

- La figure 1 est une vue en perspective d'un ensemble de liaison selon l'invention dans un premier mode de réalisation;

- la figure 2a est une vue en coupe longitudinale de l'ensemble de liaison conforme à la figure 1 et de deux profilés lors de l'assemblage, le tenon de l'ensemble de liaison étant engagé dans la rainure d'un des profilés;

- la figure 2b représente, en une vue analogue à la précédente, l'ensemble de liaison introduit à l'intérieur de l'autre profil é;

- la figure 2c représente, en une vue analoge à la précédente, l'assemblage ainsi réalisé; et

- la figure 3 représente en perspective un ensemble de liaison selon l'invention dans un second mode de réalisation.

Comme le montre la figure 1, l'ensemble de liaison 1 pour réaliser l'assemblage d'un premier 2 et d'un second 3 profilé creux, comporte essentiellement une pièce principale 4, un coulisseau 5 et un élément d'actionnement 6.

La pièce principale 4, munie d'un tenon 7 susceptible de coopérer avec la rainure 8 du premier profilé 2 présente un faible encombrement de manière à pouvoir se loger facilement à l'intérieur 9 du second profil é 3. Cette pièce 4 présente en outre, la forme générale d'un berceau 10 comportant à l'extrémité opposée au tenon 7, une pente 11, et à l'autre un épaulement 12.

Le coulisseau 5 comporte une surface d'appui 13 susceptible de coopérer par l'intermédiaire d'un bloc en élastomère 13a avec l'épaulement 12, une pente 14 susceptible de coopérer avec l'élément d'actionnement 6, et un pion escamotable 15 traversant librement ledit coulisseau 5, comportant un épaulement en appui contre ce dernier et reposant sur un bloc en élastomère 16.

De plus, l'élément d'actionnement 6 comporte une première pente 17 apte à coopérer avec la pente 11 de ladite pièce principale 4, une seconde pente 18 apte à coopérer avec la pente 14 dudit coulisseau 5, ledit élément d'actionnement 6 présentant une section trapézoïdale, et une vis 19 le traversant, ladit vis 19 coopérant avec un alésage taraudé ménagé dans ladite pièce principale 4.

Comme le montre la figure 1, l'ensemble monté se présente sous un forme monobloc, le pion 15 faisant toutefois saillie verticalement au-delà de l'enveloppe de l'ensemble, ledit pion 15 étant susceptible de coopérer avec un premier alésage 20 ménagé dans le second profile 3, un second alésage 21 étant également ménagé dans ledit profilé afin de permettre le passage d'un moyen de serrage de la vis 19.

On se référera maintenant aux figures 2a, 2b et 2c représentant un exemple d'assemblage de deux profilés à l'aide d'un ensemble de liaison selon l'invention.

Comme le montre la figure 2a, on effectue tout d'abord l'assemblage des profilés 2 et 3, en engageant le tenon 7 de l'ensemble de liaison 1 dans la rainure 8 du premier profilé 2. Ensuite, et comme le montre la figure 2b, on rapproche les deux profilés perpendiculaires 2 et 3, l'ensemble de liaison 1 pénétrant à l'intérieur du second profil é 3, après avoir appuyé sur le pion escamotable 15 jusqu'à ce que ce dernier 15 coulissant à l'intérieur 9 dudit profilé 3, comme le montre la figure 2c, ledit pion 15 soit en vis-à-vis de l'alésage 20 ménagé dans le second profil é 3, dans lequel le pion 15 s'engage alors automatiquement. A l'aide d'un moyen de serrage introduit par l'alésage 21, lequel permet d'accéder à la tête de la vis 19, on actionne cette dernière.

Un enfoncement de la vis 19 dans la pièce principale 4 provoque un déplacement vertical de l'élément d'actionnement 6, lequel, par coopération avec d'une part la pente 11 de la pièce principale 4 et la pente 14 du coulisseau 5, provoque à son tour le déplacement du coulisseau 5 dans la direction longitudinale vers l'épaulement de la pièce principale 4, ceci ayant pour effet de rapprocher le pion 15 du tenon 7 et, par conséquent, les profilés l'un de l'autre.

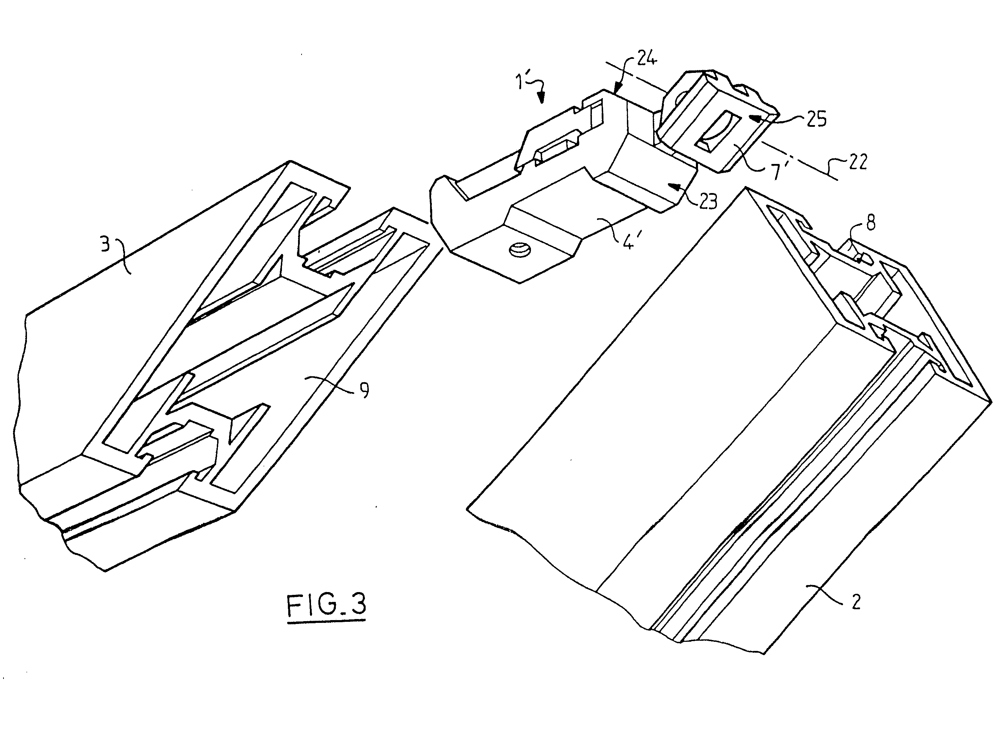

On va maintenant se référer à la figure 3 qui représente un ensemble de liaison 1' conforme à la présente invention, dans un second mode de réalisation.

Ce nouvel ensemble de liaison 1' permet de réaliser un assemblage de deux profilés 2 et 3 dont un est coupé d'onglet.

A cet effet, ce nouvel ensemble 7 diffère de celui précédemment décrit en ce qu'il comporte un tenon articulé 7', monté à pivotement autour d'un axe 22 à l'extrémité de la pièce principale 4' laquelle présente des faces inclinées 23 et 24 autorisant le pivotement du tenon 7'.

Le tenon 7' vient s'insérer dans une rainure 8 ménagée dans le premier profilé 2 tandis que l'ensemble 1' se loge à l'intérieur 9 du second profilé 3 coupé d'onglet.

De préférence, la distance séparant la surface d'appui 25 du tenon 7' de l'axe de pivotement 22 correspond sensiblement à la profondeur de la rainure 8. Cette caractéristique permet à l'axe de pivotement 22 d'être toujours dans le plan de jonction des profilés 2 et 3 quelque soit l'angle d'inclinaison de ces derniers.

Ainsi, le perçage des alésages recevant respectivement le pion escamotable et les moyens de serrage s'en trouve facilité. En effet, un seul gabarit peut être utilisé indépendamment des variations de l'angle d'inclinaison des profilés 2 et 5, la distance entre un alésage et la projection d'un point situé dans le plan de jonction selon une perpendiculaire à l'axe de second profilé, restant identique quelque soit l'angle d'inclinisaison.

Par ailleurs, le pion escamotable et les moyens de serrage peuvent être orientés indifféremment soit vers l'angle aigu, soit vers l'angle obtu de l'assemblage, le choix de l'utilisateur étant guidé en fonction des critères d'ordres esthétique ou d'accessibilité.

L'angle d'inclinaison des profilés varie selon la coupe d'onglet du second profilé dans une limite sensiblement comprise entre 30° et 120°.

Bien entendu, l'invention n'est pas limitée au mode de réalisation décrit. Ainsi, le tenon peut avantageusement comporter une vis apte à le rendre solidaire de la rainure du profilé avec lequel il coopère.

## Revendication

1. Ensemble de liaison pour réaliser l'assemblage de deux profilés creux (1, 2) dont un (2) présente au moins une rainure latérale (8), ledit ensemble (1) comportant une pièce principale (4) munie d'un tenon (7) susceptible de coopérer avec la rainure (8) latérale dudit profilé (2) et présentant un faible encombrement de manière à pouvoir se loger à l'intérieur (9) de l'autre profilé (3), ladite pièce principale (4) présentant la forme générale d'un berceau (10) susceptible d'accueillir un coulisseau (5) et un élément d'actionnement (6), ledit coulisseau (5) étant muni d'un pion escamotable (15) susceptible de coopérer avec une ouverture (20) pratiquée dans ledit profilé (3) recevant l'ensemble de liaison (1), caractérisé en ce que ledit élément d'actionnement (6) est muni d'une vis (19) le traversant et d'une pente (17), ledit berceau (10) comportant à une extrémité une pente (11) et à l'autre un épaulement (12), ledit coulisseau (5) étant situé du côté de l'épaulement (12) et ledit élément de commande (6) du côté de la pente (11), de façon à ce que, sous en enfoncement de la vis (19) dans un alésage taraudé pratiqué dans ladite pièce principale (4), ledit élément d'actionnement (6) dont la pente (17) coopère avec la pente (11) dudit berceau (10), par un déplacement vertical pousse ledit coulisseau (5) dans une direction longitudinale vers l'épaulement (12) de la pièce principale (4).

2. Ensemble selon la revendication 1, caractérisé en ce que ledit coulisseau (5) comporte une pente (14) coopérant avec une pente (18) de l'élément d'actionnement (6), lequel présente une section trapézoïdale.

3. Ensemble selon l'une des revendications 1 et 2, caractérisé en ce que ledit pion escamotable (15) est monté à coulissement dans ledit coulisseau (5), ledit pion escamotable (15) étant en appui sur un bloc en élastomère (16) reposant sur la pièce principale (4).

4. Ensemble selon l'une des revendications 1, 2 et 3, caractérisé en ce que ledit coulisseau (5) comporte une surface d'appui (13) susceptible de coopérer par l'intermédiaire d'un bloc en élastomère (13a) avec l'épaulement (12) de la pièce principale (4).

5. Ensemble selon l'une des revendications 1 à 4, caractérisé en ce que ledit profil récepteur (3) comporte un alésage (21) permettant d'accéder à la tête de la vis (19).

6. Ensemble selon l'une des revendications 1 à 5, caractérisé en ce qu'il comporte un tenon articulé (7') monté à pivotement autour d'un axe (22) à l'extrémité de la pièce principale (4), afin de réaliser l'assemblage de deux profilés dont un est coupé d'onglet, l'angle d'inclinaison des profilés dépendant de la coupe d'onglet de ce profilé.

7. Ensemble selon la revendication 6, caractérisé en ce que la distance séparant la surface d'appui (25) du tenon (7') de l'axe de pivotement (22) correspond sensiblement à la profondeur de la rainure (8), de sorte que l'axe de pivotement (22) soit toujours dans le plan de jonction des profilés quelque soit l'angle d'inclinaison de ces derniers.

## Patentansprüche

1. Verbindungssatz zur Herstellung einer Verbindung zweier Hohlprofile (1, 2), von denen eines (2) mindestens eine seitliche Nut (8) aufweist, wobei der Satz (1) ein Hauptstück (4) enthält, das mit einem Zapfen (7), der in der Lage ist, mit der seitlichen Nut (8) des Profiles (2) zusammenzuwirken, versehen ist und einen geringeren Platzbedarf aufweist, so dass es im Innern (9) des anderen Profils (3) untergebracht werden kann, wobei das Hauptstück (4) die allgemeine Form einer Wiege (10) aufweist, die in der Lage ist, einen Schlitten (5) und ein Betätigungselement (6) aufzunehmen, wobei der Schlitten (5) mit einem versenkbaren Zapfen (15) versehen ist, der in der Lage ist, mit einer in dem den Verbindungssatz (1) aufnehmenden Profil (3) angeordneten Öffnung (20) zusammenzuwirken, dadurch gekennzeichnet, dass das Betätigungselement (6) mit einer es durchquerenden Schraube (19) und einer Schrägfläche (17) versehen ist, die Wiege (10) an einem Ende eine Schrägfläche (11) und am anderen Ende eine Schulter (12) aufweist, der Schieber (5) auf der Seite der Schulter (12) und das Betätigungselement (6) auf der Seite der Schrägfläche (11) angeordnet ist, so dass bei einem Eindringen der Schraube (19) in eine in dem Hauptstück (4) angeordnete Gewindebohrung das Betätigungselement (6), dessen Schrägfläche (17) mit der Schrägfläche (11) der Wiege (10) zusammenwirkt, durch eine senkrechte Verlagerung den Schieber (5) in eine Längsrichtung gegen die Schulter (12) des Hauptstücks (4) drückt.

2. Satz nach Anspruch 1, dadurch gekennzeichnet, dass der Schlitten (5) eine mit einer Schrägfläche (18) des Betätigungselementes (6) zusammenwirkende Schrägfläche (14) aufweist, wobei das Betätigungselement einen trapezartigen Querschnitt aufweist.

3. Satz nach einem der Ansprüche 1 und 2, dadurch gekennzeichnet, dass der versenkbare Zapfen (15) gleitend in dem Schieber (5) befestigt ist, und sich auf einem Elastomerblock (16) abstützt, der auf dem Hauptstück (4) ruht.

4. Satz nach einem der Ansprüche 1, 2 und 3, dadurch gekennzeichnet, dass der Schieber (5) eine Stützfläche (13) aufweist, die in der Lage ist, über einen Elastomerblock (13a) mit der Schulter (12) des Hauptstücks (4) zusammenzuwirken.

5. Satz nach einem der Ansprüche 1 bis 4, dadurch gekennzeichnet, dass das Aufnahmeprofil (3) eine Bohrung (21) aufweist, die den Zugang zu dem Kopf der Schraube (19) ermöglicht.

6. Satz nach einem der Ansprüche 1 bis 5, dadurch gekennzeichnet, dass er einen schwenkbar um eine Achse (22) am Ende des Hauptstücks (4) befestigten Gelenkzapfen (7') aufweist, um das Zusammensetzen zweier Profile zu ermöglichen, von denen eines auf Gehrung geschnitten ist, wobei der Neigungswinkel der Profile von dem Gehrungsschnitt dieses Profils abhängt.

7. Satz nach Anspruch 6, dadurch gekennzeichnet, dass der die Stützoberfläche (25) des Zapfens (7') von der Schwenkachse (22) trennende Abstand etwa der Tiefe der Nut (8) entspricht, so dass die Schwenkachse (22) immer in der Verbindungsebene der Profile liegt, welches auch immer der Neigungswinkel dieser letzteren ist.

## Claims

1. Joining assembling two hollow sections (1, 2), whereof one has at least one lateral groove (8), said assembly (1) having a main part (4) provided with a tenon (7) able to cooperate with the lateral groove (8) of said section (2) and having small overall dimensions, so that it can be located in the interior (9) of the other section (3), said main part (4) having the general shape of a cradle (10), which can receive a slide (5) and an actuating member (6), said slide (5) being provided with a retractable in (15) able to cooperate with an opening (20) made in said section (3) receiving the joining assembly (1), characterized in that the actuating member (6) is provided with a screw (19) passing through the same and a slope (17), said cradle (10) having at one end a slope (11) and at the other end a shoulder (12), said slide being located on the side of the shoulder (12) and said actuating member (6) on the side of the slope (11), so that, when the screw (19) is driven into a tapped hole made in said main part (4), the actuating member (6), whereof the slope (17) cooperates with the slope (11) of said cradle (10), as a result of the vertical displacement forces said slide (5) in a longitudinal direction towards the shoulder (12) of the main part (4).

2. Assembly according to claim 1, characterized in that said slide (5) has a slope (14) cooperating with a slope (18) of the actuating member (6), which has a trapezoidal section.

3. Assembly according to either of the claims 1 and 2, characterized in that said retractable pin (15) is slidingly mounted in said slide (5), said retractable pin (15) bearing on an elastomer block (16) rsting on the main part (4).

4. Assembly according to one of the claims 1, 2 and 3, characterized in that the slide (5) has a bearing surface (13) able to cooperate via an elastomer block (13a) with the shoulder (12) of the main part (4).

5. Assembly according to one of the claims 1 to 4, characterized in that the receiving section (3) has a bore (21) giving access to the head of the screw (19).

6. Assembly according to one of the claims 1 to 5, characterized in that it has an articulated tenon (7') pivotably mounted about an axis (22) at the end of the main part (4), in order to bring about the assembly of two sections, whereof one is mitre out, the inclination angle of the sections being dependent on the mitre out of said section.

7. Assembly according to claim 6, characterized in that the distance separating the bearing surface (25) of tenon (7') from the pivoting axis (22) substantially corredponds to the depth of groove (8), so that the pivoting axis (22) is always in the junction plane of these sections, no matter what the inclination angle of the latter.

FIG_1

FIG. 2A

FIG. 2B

FIG. 2C

0 164 479

FIG.3

11